# DEMANDE DE BREVET EUROPEEN

(11) **EP 3 138 645 A1**
(43) Date de publication de la demande: **08.03.2017**
(21) Numéro de dépôt: 16186632.2
(22) Date de dépôt: 31.08.2016
(51) Int. Cl.: B23D 65/00, B23D 65/04

(54) **PROCÉDÉ DE FABRICATION D'UNE LAME DE SCIE**

(30) Priorité: 01.09.2015 CH 12542015
(71) Demandeur: Usines Metallurgiques de Vallorbe SA, 1337 Vallorbe (CH)
(72) Inventeur: Allaki, Bruno, 1007 Lausanne (CH)
(74) Mandataire: Cronin, Brian Harold John

(57) **Abrégé**

Un procédé de fabrication de lames de scie à partir d'un composant de départ par une pluralité d'étapes exécutées comprend une première étape a) de préparation d'un composant de départ sous forme d'un rouleau d'une bande de métal, une deuxième étape b) de taillepar usinage, dans la bande de métal déroulé, d'une ébauche de lame de scie, notamment au moyen de limes, et une troisième étape c) de trempe de l'ébauche de la lame de scie et de revenu pour durcir la lame. Le procédé comprend en outre une étape d) de lubrification en surface de la lame de scie au moyen d'un lubrifiant pendant ou après les étapes b) et c).

## Description

La présente invention se rapporte àun procédé de fabrication d'une lame de scie.

De nombreux types de scies visant à avoir une durée de vie plus longues sont connus de l'état antérieur.

Certaines lames utilisées pour trancher ou couper différents matériaux réalisées en aciers inoxydables dont les duretés sont adaptées à l'utilisation de l'outil présentent une usure prématurée de l'arête tranchante, notamment en cas d'utilisation répétée et/ou de mauvaise utilisation. Il est alors nécessaire de reformer cette arête tranchante par affûtage, aiguisage ou meulage. Dans tous les cas, cette opération ne peut être répétée indéfiniment.

On connaît des procédés où l'arête tranchante est d'une dureté supérieure à la dureté du reste de la lame afin d'en limiter l'usure. Par exemple, WO03000457 décrit un procédé où, sur la lame d'une scie, une matière est déposée sous forme pulvérulente, mélangée et solidifiée à l'aide d'un laser, préalablement à la mise en forme de l'arête tranchante. La mise en forme de l'arête tranchante s'effectue entre des rouleaux de type laminoir qui mettent en forme, à chaud, l'arête tranchante. Le laser permet d'amener la matière à température. Un inconvénient est quela liaison entre le corps de lame et le matériau mis en forme n'est pas optimal.

On connaît également des procédés dits de rechargement où sur une arête d'une lame tranchante on dépose un revêtement en matériau dur. De tels procédés, utilisant par exemple la microsoudure, sont décrits dans JP01029288 avecle rechargement à l'aide d'un film sur l'arête tranchante d'une lame par plaquage ionique.

Il est également connu d'utiliser une huile de protection anticorrosion sur les lames mais l'efficacité sur la longévité des lames de scies et les performances de coupe ne sont pas satisfaisantes.

Pour ce qui est des lames de scies de précision utilisées notamment par des bijoutiers, ceux-ci utilisent par exemple une cire d'abeille pure, appliquée sur la lame de scie par le bijoutier, pour améliorer la durée de vie des lames et ainsi lutter contre l'usure prématurée des lames.

Le but de la présente invention est de proposer un procédé pour la fabrication des lames de scies dont les performances de coupe et la longévité sont améliorées.

Conformément à l'invention, un procédé de fabrication de lames de scie à partir d'un composant de départ par une pluralité d'étapes exécutées sur la même installation, comprend une première étape a) de préparation d'un composant de départ sous forme d'un rouleau d'une bande de métal, une deuxième étape b) d'usinage d'une ébauche de lame de scie, notamment au moyen de limes, fraises ou meules et une troisième étape c) de trempe de l'ébauche de la lame de scie et de revenu pour durcir la lame. Le procédé comprend en outre une étape qui consiste en une lubrification en surface de la lame de scie au moyen d'un lubrifiant pendant ou après les étapes b) et c).

En fonction du procédé, toute substance lubrifiante ayant pour but de lubrifier la lame, notamment un lubrifiant à base d'un produit liquide ou solide choisi parmi une cire naturelle, minérale ou artificielle ; une huile naturelle, minérale ou de synthèse ; de la vaseline ; du pétrole ; un minéral à base de carbone tel le graphite, du nitrure de Bore (BN) ; un polymère tel le polytétrafluoroéthylène (PTFE) ; ou un sulfure de molybdène.

Dans une autre forme d'exécution, le lubrifiant est mélangé avec une huile comme une huile anticorrosion ou une huile de trempe.

Dans une autre forme d'exécution, un dépôt chimique ou électrolytique peut être réalisé et avoir un rôle lubrifiant. Par exemple un dépôt en nickel chimique à base de graphite, BN, PTFE, ou sulfure de molybdène ou par la technologie PVD (Physical VaporDeposition) consistant en une méthode de dépôt sous vide de films minces, par exemple un dépôt de nitrure de titane (TiN).

Dans une autre forme d'exécution, le lubrifiant est déposé sur la scie par spray. Par exemple, après une opération de trempe, le lubrifiant étant préalablement chauffé, si besoin, pour être sous forme liquide avant application, et/ou la scie étant chauffée.

Dans une autre forme d'exécution, le lubrifiant est déposé sur la scie par trempe. Par exemple, le lubrifiant peut être préalablement chauffé, si besoin, pour être sous forme liquide avant application.

Dans encore une autre forme d'exécution, le lubrifiant est déposé dans un bac en continu dans lequel la scie étant sous forme d'un rouleau est trempée avant une découpe à la longueur.

Dans une autre forme d'exécution, le lubrifiant est déposé par contact par exemple par brossage, à l'aide d'un pinceau et d'un tampon.

Dans une forme d'exécution, la lame de scie produite présente de préférence un dos de lame et une denture, constituée d'une pluralité de dents de scie placées l'une derrière l'autre, cette denture s'étendant le long du bord inférieur du dos de scie, la lame de scie ayant une longueur comprise entre 5 centimètres et 50 centimètres, typiquement entre 8 centimètres et 20 centimètres, des dents de scie d'une largeur comprise entre 0.1 millimètre et 4 millimètres, typiquement entre 0.2 millimètre et 1.5 millimètres, et une épaisseur de lame comprise entre 0.05 millimètre et 3 millimètres, typiquement entre 0.1 millimètre et 1.3 millimètres, la lame de scie étant lubrifiée au cours du procédé de fabrication.

Dans une forme d'exécution, la lame de scie lubrifiée en surface peut être emballée dans un étui de protection.

De préférence, la lame de scie lubrifiée appartientà unensemblede plusieurs lames regroupées soit avec les lames de mêmes dimensions soit avec des lames de dimensions différentes.

La lame de scie peut être assemblée de manière interchangeable à un porte-scie, bocfil, telle une scie à chantourner. Leur grand espace entre la lame et le cadre de la scie permet de chantourner le motif à découper.

Les caractéristiques de l'invention apparaitront plus clairement à la lecture de la description de plusieurs formes d'exécution données uniquement à titre d'exemple, nullement limitative en se référant aux figures schématiques, dans lesquelles :
- La figure 1 représenteun diagramme des étapes du procédé de fabrication d'une lame selon l'invention ;
- La figure 2 représente une vue partielle d'une lame de scie ; et
- La figure 3 représente une vue partielle d'une lame de scie torsadée.

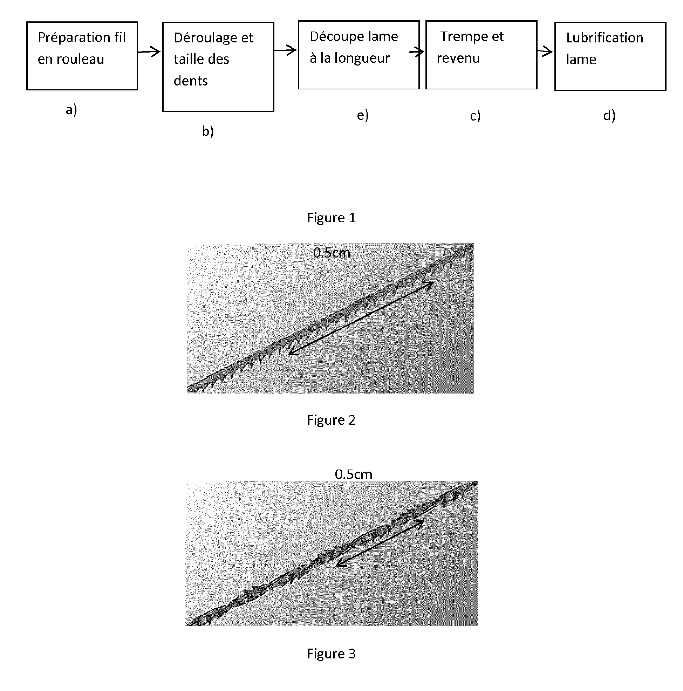

Comme illustré à la figure 1, un procédé de fabrication de lames de scie à partir d'un composant de départ, comprend une première étape a) de préparation d'un composant de départ sous forme d'un rouleau d'une bande de métal. Ces rouleaux sont déroulés pour une deuxième étape b) de taille d'une ébauche de lame de scie, par exemple par une opération d'usinage notamment au moyen de limes, de fraises ou de meules, une troisième étape e) de découpe à la longueur de la lame de scie peut avoir lieu avant l'étape b) ou après une étape c) de trempe de l'ébauche de la lame de scie et de revenu pour durcir la lame ou une étape d) de lubrification en surface de la lame de scie. En outre, l'étape d) consiste en une lubrification en surface de la lame de scie au moyen d'un lubrifiant pendant ou après les étapes b) et c).

Une lame de scie produite selon le procédé de la présente invention offre pour la même utilisation, en comparaison avec une lame de scie non lubrifiée, une durée de vie pouvant aller jusqu'à 3 fois plus longtemps, typiquement entre 1,5 fois et 2 fois, que la durée de vie normale. Pour un effet maximum, l'utilisateur pourra rajouter du lubrifiant au cours de l'utilisation.

Ces étapes peuvent être exécutées sur une seule et même installation comportant l'outillage nécessaire pour chaque étape.

Ces lames de scies de précision comportent un dépôt en surface d'un produit lubrifiant permettant d'allonger la durée de vie de la scie.Ainsi, grâce à cet aspect lubrifiant de la lame, les frottements et par conséquent l'échauffement de la lame et sa détérioration sont réduits. De plus, le lubrifiant peut également avoir un effet réfrigérant, notamment en absorbant la chaleur dégagée lors de l'utilisation, et ainsi éviter également l'échauffement de la lame et sa détérioration. Le dépôt pourra également favoriser l'évacuation des copeaux.

La figure 2 illustre partiellement une lame de scie dont la longueur correspond à 13 centimètres, avec des dents de scie d'une largeur de 0.36 millimètre et une épaisseur de lame de 0.18 millimètre. Dans cet exemple, la lame comporte 32 dents par centimètre. Cette scie est adaptée pour les métaux durs et les métaux précieux.

La figure 3 illustre partiellement une lame de scie torsadée en forme de spirale, dont la longueur correspond à 13 centimètres, avec des dents de scie d'une largeur de 0.6 millimètre et une épaisseur de lame de 0.36 millimètre. Dans cet exemple, la lame comporte 22 dents par centimètre et est adaptée aux découpes multidirectionnelles.

Lors de l'étape de lubrification, le lubrifiant peut être à base de cire naturel, minéral, artificielle, telle que la paraffine, la cire d'abeille pur ou à base de cire d'abeille (à partir de 0.5%), la cire de silicone.L'épaisseur de la couche de lubrifiant peut aller de 5 microns à 150 microns.

Il est également possible d'utiliser un lubrifiant pour lame de scie ou outil/coupant, initialement conçu pour être appliqué par l'utilisateur final. L'application d'un tel lubrifiant, lors de la production de la lame de scie, permet de prolonger la durée de vie des lames (réduction des frictions, élimination de l'échauffement) et d'améliorer la qualité de coupe.

Une huile de coupe pour l'usinage des métauxou unehuile utilisée lors des opérations de coupe et graissage desmachines-outils peut convenir.

Le lubrifiant peut également être à base de bisulfure de molybdène, par exemple sous forme d'aérosol. Ce lubrifiant, forme un revêtement au bisulfure de molybdène adhérent à la température ambiante. Ce revêtement agit comme un lubrifiant sec, il évite l'accumulation de poussières ou d'impuretés. Ce revêtement crée une surface de frottement idéale pour protéger la lame de scie.

Sur le même principe, le lubrifiant peut être à base de PTFE, par exemple sous forme d'aérosol,qui crée une surface de frottement et offre une protection contre la corrosion.

Dans une variante, le lubrifiant peut être mélangé à une huile anticorrosion ou, par exemple une huile de trempe,et à un autre produit additionnel.

Dans un premier exemple de procédé, la lame peut directement être trempée dans une solution lubrifiante avant de subir une opération de séchage. La solution lubrifiantepeutnécessiter d'être chauffée pour être sous forme liquide avant son application, par exemple directement par chauffage ou en bain-marie. Un post traitement pour obtenir la bonne consistance / recouvrement / épaisseur du lubrifiant pourra être souhaitable, par exemple par le passage de la lame dans un four, par une opération de soufflage d'air chaud ou froid, ou par chauffage de la lame ou des pièces en contacts.

Dans un autre exemple, le lubrifiant peut être sprayé sur les lames après une opération de trempe.Ce procédé pourra subir les mêmes post traitements que le trempage, en continu ou en vrac après découpe à la longueur.

Dans encore un autre exemple, avant une opération de découpe à longueur de la scie, celle-ci étant encore sous forme de rouleau, les scies en rouleaux pourront être passées dans une cellule de trempe / un bac en continu. Ce procédé pourra subir les mêmes post traitements que le trempage, en continu ou en vrac après découpe à la longueur.

De préférence, le lubrifiant couvre toute l'étendue des lames de scie mais dans une variante, à défaut de couvrir toute la lame de scie, le lubrifiant peut être limité à la partie coupante avec les dents de scie.

## Revendications

1. Procédé de fabrication de lames de scie à partir d'un composant de départ par une pluralité d'étapes exécutées, à savoir :
a) une première étape de préparation d'un composant de départ sous forme d'un rouleau d'une bande de métal,
b) une deuxième étape de taille par usinage,dans la bande de métal déroulé, d'une ébauche de lame de scie, notamment au moyen de limes, de fraises ou de meules,
c) une troisième étape de trempe de l'ébauche de la lame de scie et de revenu pour durcir la lame,
caractérisépar
une étape d) de lubrification en surface de la lame de scie au moyen d'un lubrifiant pendant ou après les étapes b) et c).

2. Procédé de fabrication selon la revendication 1, dans lequel les lames de scie produites ont une longueur comprise entre 5 centimètres et 50 centimètres, typiquement entre 8 centimètres et 20 centimètres, des dents de scie d'une largeur comprise entre 0.1 millimètre et 4 millimètres, typiquement entre 0.2 millimètre et 1.5 millimètre et une épaisseur de lame comprise entre0.05 millimètre et 3 millimètres, typiquement entre 0.1 millimètre et 1.3 millimètres.

3. Procédé de fabrication selon la revendication 1 ou 2, dans lequel le lubrifiant està base d'un produit liquide ou solide choisi parmi une cire naturelle, minérale ou artificielle ; une huile naturelle, minérale ou de synthèse ; de la vaseline ;du pétrole ; un minéral à base de carbone tel le graphite ;du nitrure de bore (BN) ; un polymère tel le polytétrafluoroéthylène (PTFE) ; ou un sulfure de molybdène.

4. Procédé selon l'une des revendications précédentes, dans lequel le lubrifiant est mélangé avec une huilecomme une huile anticorrosion ou une huile de trempe.

5. Procédé selon l'une des revendications 1 à 4, dans lequelle lubrifiant est déposé sur la scie par spray après une opération de trempe, le lubrifiant étant préalablement chauffé pour être sous forme liquide avant application, et/ou la scie étant chauffée.

6. Procédé selon l'une desrevendications 1 à 4, dans lequel le lubrifiant est déposé sur la lame de scie par trempe, le lubrifiant étant préalablement chauffé pour être sous forme liquide avant application.

7. Procédé selon l'une des revendications 1 à 4, dans lequel le lubrifiant est déposé dans un bac en continu dans lequel la lame de scie sous forme d'un rouleau est trempée avant une découpe à la longueur.

8. Procédé selon l'une des revendications précédentes, **caractérisé en ce que** après les étapes a) à c), la lame de scie lubrifiée en surface est emballée dans un étui de protection.

9. Procédé selon l'une des revendications précédentes, **caractérisée par** une étape supplémentaire de regrouper une pluralité de lames de scie revêtues en un ensemblede plusieurs lames regroupées.

10. Procédé selon l'une des revendications précédentes, **caractérisée en ce que** la lame de scie est pourvue d'un côté avec des dents de scie et de l'autre côté avec un dos non denté.

11. Procédé selon la revendication 10, **caractérisé en ce que** la lame de scie est torsadée.
